# EUROPEAN PATENT APPLICATION

(11) **EP 4 769 923 A1**
(43) Date of publication of application: **01.07.2026**
(21) Application number: 25226992.3
(22) Date of filing: 23.12.2025
(51) Int. Cl.: H02M 3/00, H02M 3/28, H02M 3/335

(54) **BIDIRECTIONAL DIRECT CURRENT-DIRECT CURRENT CONVERSION APPARATUS AND CHARGING PILE**

(30) Priority: 31.12.2024 CN 202411999590
(71) Applicant: Huawei Technologies Co., Ltd., Shenzhen, Guangdong 518129 (CN)
(72) Inventor: PAN, Denghai, Shenzhen 518129 (CN); ZHU, Hongfei, Shenzhen 518129 (CN); TANG, Weiming, Shenzhen 518129 (CN); NING, Jichao, Shenzhen 518129 (CN); ZHANG, Bingxu, Shenzhen 518129 (CN)
(74) Representative: Gill Jennings & Every LLP

(57) **Abstract**

Embodiments of this application provide a bidirectional DC-DC conversion apparatus and a charging pile. The bidirectional DC-DC conversion apparatus includes a first power conversion circuit, a second power conversion circuit, a three-phase transformer, three phase resonant circuits, a resonant switching switch circuit, and an inductor circuit. Each phase of resonant circuit includes a first capacitor and a first inductor that are connected in series. One end of each phase of resonant circuit is connected to the first power conversion circuit, and the other end of each phase of resonant circuit is connected to the second power conversion circuit via the three-phase transformer. The resonant switching switch circuit is configured to connect a circuit between either of two ends of each phase of resonant circuit and the inductor circuit, to enable each phase of resonant circuit and the inductor circuit to form an LLC resonant circuit. In embodiments of this application, a voltage regulation range and power conversion efficiency of the bidirectional DC-DC conversion apparatus during bidirectional transmission of electric energy can be improved, thereby achieving an efficient input or output in a wide voltage range.

## Description

### TECHNICAL FIELD

This application relates to the charging field, and more specifically, to a bidirectional direct current-direct current conversion apparatus and a charging pile.

### BACKGROUND

With rapid development of electric vehicles, in addition to a charging function, an electric vehicle also starts to be equipped with a discharging function, for example, a vehicle-to-grid (vehicle-to-grid, V2G) discharging function. Correspondingly, a charging pile as an auxiliary facility gradually uses a bidirectional direct current-direct current (direct current-direct current, DC-DC) conversion apparatus that can implement bidirectional transmission of electric energy. When the electric vehicle is charged via the charging pile, the bidirectional DC-DC conversion apparatus operates forward. When the electric vehicle discharges to a power grid via the charging pile, the bidirectional DC-DC conversion apparatus operates reversely.

Currently, to meet charging required voltages and discharging required voltages of different electric vehicles, bidirectional DC-DC conversion apparatuses of charging piles need to meet a requirement of bidirectional transmission of electric energy in a wide voltage range. However, a voltage regulation range of the bidirectional DC-DC conversion apparatus currently used by the charging pile is narrow when the bidirectional DC-DC conversion apparatus operates reversely, and the requirement of bidirectional transmission of electric energy in a wide voltage range cannot be well met.

### SUMMARY

This application provides a bidirectional DC-DC conversion apparatus and a charging pile, to improve a voltage regulation range and power conversion efficiency of the bidirectional DC-DC conversion apparatus during bidirectional transmission of electric energy, thereby achieving an efficient input or output in a wide voltage range.

According to a first aspect, an embodiment of this application provides a bidirectional direct current-direct current DC-DC conversion apparatus. The bidirectional DC-DC conversion apparatus includes a first power conversion circuit, a second power conversion circuit, a three-phase transformer, and three phase resonant circuits. Each phase of resonant circuit of the three phase resonant circuits includes a first capacitor and a first inductor that are connected in series, one end of each phase of resonant circuit is connected to the first power conversion circuit, and the other end of each phase of resonant circuit is connected to the second power conversion circuit via the three-phase transformer. The bidirectional DC-DC conversion apparatus further includes a resonant switching switch circuit and an inductor circuit. The resonant switching switch circuit is configured to connect a circuit between either of two ends of each phase of resonant circuit and the inductor circuit, to enable each phase of resonant circuit and the inductor circuit to form an inductor-inductor-capacitor LLC resonant circuit.

Based on the foregoing design, when electric energy is transmitted from the first power conversion circuit to the second power conversion circuit via the three phase resonant circuits, or when electric energy is transmitted from the second power conversion circuit to the first power conversion circuit via the three phase resonant circuits, that is, when the electric energy is transmitted forward or reversely in the bidirectional DC-DC conversion apparatus, a circuit between the inductor circuit and either end that is of the two ends of each phase of resonant circuit and that is used as an output can be connected via the resonant switching switch circuit, so that each phase of resonant circuit and the inductor circuit form the LLC resonant circuit. Because a voltage gain of the LLC resonant circuit may be less than or equal to 1, or may be greater than 1, the bidirectional DC-DC conversion apparatus can implement voltage reduction and voltage boosting, thereby improving a voltage regulation range of the bidirectional DC-DC conversion apparatus during bidirectional transmission of the electric energy. In addition, the LLC resonant circuit has a small input/output undulating current and high power density, and can implement soft switching. Therefore, power conversion efficiency of the bidirectional DC-DC conversion apparatus during the bidirectional transmission of the electric energy can be further improved. In this way, the bidirectional DC-DC conversion apparatus can achieve an efficient input or output in a wide voltage range.

In an implementation, the resonant switching switch circuit is configured to: when the first power conversion circuit is configured to convert a received direct current into an alternating current, and the second power conversion circuit is configured to convert the alternating current output by the first power conversion circuit into a direct current for output, connect a circuit between the other end of each phase of resonant circuit and the inductor circuit; or when the second power conversion circuit is configured to convert a received direct current into an alternating current, and the first power conversion circuit is configured to convert the alternating current output by the second power conversion circuit into a direct current for output, connect a circuit between the one end of each phase of resonant circuit and the inductor circuit.

Based on the foregoing design, when the electric energy is transmitted forward or reversely in the bidirectional DC-DC apparatus, the circuit between the inductor circuit and either end that is of the two ends of each phase of resonant circuit and that is used as the output can be connected, to ensure that the LLC resonant circuit is formed when the electric energy is transmitted forward or reversely in the bidirectional DC-DC conversion apparatus.

In an implementation, the inductor circuit includes three second inductors, and the two ends of each phase of resonant circuit are connected to one end of one second inductor via the resonant switching switch circuit.

Based on the foregoing design, the first capacitor and the first inductor that are connected in series in each phase of resonant circuit can be connected to the second inductor via the resonant switching switch circuit, to form the LLC resonant circuit. In addition, in comparison with a problem that an air gap size of a magnetic core of the three-phase transformer is large due to integration of an excitation inductor and the three-phase transformer, the three second inductors in embodiments of this application may be used as three excitation inductors and disposed separately from the three-phase transformer. This can greatly reduce the air gap size of the magnetic core of the three-phase transformer, thereby further improving efficiency and stability of the three-phase transformer.

In an implementation, the resonant switching switch circuit includes three resonant switching switches, and the two ends of each phase of resonant circuit are connected to the one end of the second inductor via one resonant switching switch. The two ends of each phase of resonant circuit are connected to two stationary contacts of the resonant switching switch in a one-to-one correspondence. The one end of the second inductor is connected to a moving contact of the resonant switching switch, and the other ends of the three second inductors are connected. Alternatively, the three second inductors are sequentially connected end-to-end, and connection points of the second inductor and another second inductor are connected to a moving contact of the resonant switching switch.

Based on the foregoing design, when the electric energy is transmitted forward or reversely in the bidirectional DC-DC conversion apparatus, a circuit between the second inductor and either end that is of the two ends of each phase of resonant circuit and that is used as the output can be connected by connecting a moving contact of each resonant switching switch to either of two stationary contacts of the resonant switching switch, so that the second inductor and the first inductor and the first capacitor connected in series in each phase of resonant circuit form the LLC resonant circuit. In addition, the three second inductors may be connected by using a star connection, so that the bidirectional DC-DC conversion apparatus is applicable to an application scenario in which a high voltage and a small current are required. Alternatively, the three second inductors may be connected by using a delta connection, so that the bidirectional DC-DC conversion apparatus is applicable to an application scenario in which a low voltage and a large current are required.

In an implementation, the bidirectional DC-DC conversion apparatus further includes a plurality of second capacitors, the second power conversion circuit includes three second power conversion bridge arms connected in parallel, and a bridge arm midpoint of each second power conversion bridge arm is connected to the three-phase transformer via one second capacitor.

Based on the foregoing design, when the electric energy is transmitted from the second power conversion circuit to the first power conversion circuit, that is, when the electric energy is reversely transmitted in the bidirectional DC-DC conversion apparatus, the disposed second capacitor can prevent the magnetic core of the three-phase transformer from being magnetically biased, thereby further improving the stability of the three-phase transformer during operation.

In an implementation, the three-phase transformer includes three phase primary-side windings and three phase secondary-side windings, the three phase primary-side windings are connected to the other ends of the three phase resonant circuits in a one-to-one correspondence, and the three phase secondary-side windings are connected to three bridge arm midpoints of the three second power conversion bridge arms in a one-to-one correspondence. The bidirectional DC-DC conversion apparatus further includes at least one of a first turn-quantity switching switch circuit and a second turn-quantity switching switch circuit. The first turn-quantity switching switch circuit is connected to the three phase primary-side windings, and the first turn-quantity switching switch circuit is configured to switch a quantity of circuit-connected turns of each phase of primary-side winding of the three phase primary-side windings. The second turn-quantity switching switch circuit is connected to the three phase secondary-side windings, and the second turn-quantity switching switch circuit is configured to switch a quantity of circuit-connected turns of each phase of secondary-side winding of the three phase secondary-side windings.

Based on the foregoing design, when the electric energy is transmitted forward or reversely in the bidirectional DC-DC conversion apparatus, a circuit-connected winding turn ratio of the three-phase transformer can be adjusted via the at least one of the first turn-quantity switching switch circuit and the second turn-quantity switching switch circuit, to adjust an operating voltage range of the bidirectional DC-DC conversion apparatus, so that the bidirectional DC-DC conversion apparatus achieves the input or output in the wide voltage range.

In an implementation, when the bidirectional DC-DC conversion apparatus includes the first turn-quantity switching switch circuit, each phase of primary-side winding includes a first primary-side winding and a second primary-side winding, ends of three first primary-side windings are connected to the other ends of the three phase resonant circuits in a one-to-one correspondence, the other end of the first primary-side winding of one phase of primary-side winding is connected to one end of the second primary-side winding of the one phase of primary-side winding to form a first tap, and the other ends of three second primary-side windings are connected. The first turn-quantity switching switch circuit includes two first turn-quantity switching switches, and the two first turn-quantity switching switches are connected to two phases of primary-side windings that are of the three phase primary-side windings and that are other than the one phase of primary-side winding in a one-to-one correspondence. Each first turn-quantity switching switch is configured to connect a circuit between the other end of the first primary-side winding of one corresponding phase of primary-side winding and one end of the second primary-side winding of the corresponding phase of primary-side winding. Alternatively, each first turn-quantity switching switch is configured to connect a circuit between the other end of the first primary-side winding of the corresponding phase of primary-side winding and the first tap.

Based on the foregoing design, when the electric energy is transmitted forward or reversely in the bidirectional DC-DC conversion apparatus, a moving contact of each first turn-quantity switching switch can be connected to either of two stationary contacts of the first turn-quantity switching switch, to switch the quantity of circuit-connected turns of each phase of primary-side winding to a quantity of turns of the first primary-side winding of each phase of primary-side winding or a sum of quantities of turns of the first primary-side winding and the second primary-side winding of each phase of primary-side winding. In this way, the operating voltage range of the bidirectional DC-DC conversion apparatus can be adjusted to achieve the input or output in the wide voltage range.

In an implementation, when the bidirectional DC-DC conversion apparatus includes the second turn-quantity switching switch circuit, each phase of secondary-side winding includes a first secondary-side winding and a second secondary-side winding, and ends of three first secondary-side windings are connected to the three bridge arm midpoints of the three second power conversion bridge arms in a one-to-one correspondence. The other end of the first secondary-side winding of one phase of secondary-side winding is connected to one end of the second secondary-side winding of the one phase of secondary-side winding to form a second tap, and the other ends of three second secondary-side windings are connected. The second turn-quantity switching switch circuit includes two second turn-quantity switching switches, and the two second turn-quantity switching switches are connected to two phases of secondary-side windings that are of the three phase secondary-side windings and that are other than the one phase of secondary-side winding in a one-to-one correspondence. Each second turn-quantity switching switch is configured to connect a circuit between the other end of the first secondary-side winding of one corresponding phase of secondary-side winding and one end of the second secondary-side winding of the corresponding phase of secondary-side winding. Alternatively, each second turn-quantity switching switch is configured to connect a circuit between the other end of the first secondary-side winding of the corresponding phase of secondary-side winding and the second tap.

Based on the foregoing design, when the electric energy is transmitted forward or reversely in the bidirectional DC-DC conversion apparatus, a moving contact of each second turn-quantity switching switch can be connected to either of two stationary contacts of the second turn-quantity switching switch, to switch the quantity of circuit-connected turns of each phase of secondary-side winding to a quantity of turns of the first secondary-side winding of each phase of secondary-side winding or a sum of quantities of turns of the first secondary-side winding and the second secondary-side winding of each phase of secondary-side winding. In this way, the operating voltage range of the bidirectional DC-DC conversion apparatus can be adjusted to achieve the input/output in the wide voltage range.

In an implementation, each phase of secondary-side winding includes a plurality of groups of secondary-side windings, there are a plurality of second power conversion circuits, and the plurality of groups of secondary-side windings are connected to one bridge arm midpoint of each of the plurality of second power conversion circuits in a one-to-one correspondence. The bidirectional DC-DC conversion apparatus further includes one or more connection switching switch circuits, and any two of the plurality of second power conversion circuits are connected to each other via the connection switching switch circuit. Each connection switching switch circuit includes one series switch and two parallel switches, the series switch is configured to connect the any two second power conversion circuits in series, and the two parallel switches are configured to connect the any two second power conversion circuits in parallel.

Based on the foregoing design, when the electric energy is transmitted from the first power conversion circuit to the second power conversion circuit, that is, when the electric energy is transmitted forward in the bidirectional DC-DC conversion apparatus, the plurality of second power conversion circuits can be connected in series or in parallel via the plurality of connection switching switch circuits. In this way, an output voltage range of the plurality of second power conversion circuits can be adjusted, so that the bidirectional DC-DC conversion apparatus achieves the voltage output in the wide range. In this way, when the plurality of second power conversion circuits output converted direct currents to electric vehicles to charge the electric vehicles, charging power required by different electric vehicles can be better met.

According to a second aspect, a charging pile is provided. The charging pile includes an alternating current-direct current AC-DC conversion apparatus and the bidirectional direct current-direct current DC-DC conversion apparatus according to any one of the implementations of the first aspect. One end of the AC-DC conversion apparatus is configured to connect to an alternating current power supply, and the other end of the AC-DC conversion apparatus is connected to a charging connector via the bidirectional DC-DC conversion apparatus.

In an implementation, one end of the first power conversion circuit is connected to the other end of the AC-DC conversion apparatus, and the other end of the first power conversion circuit is connected to the one end of each phase of resonant circuit.

It should be understood that the one end of the first power conversion circuit may be understood as a direct current connection end of the first power conversion circuit, and the other end of the first power conversion circuit may be understood as three-phase alternating current connection ends of the first power conversion circuit.

Based on the foregoing design, when the charging pile outputs electric energy to an electric vehicle via the charging connector, in the bidirectional DC-DC conversion apparatus, the electric energy output by the AC-DC conversion apparatus can be output, by the first power conversion circuit, to the charging connector after passing through the three-phase transformer and the second power conversion circuit. In this way, LLC resonance, of the bidirectional DC-DC conversion apparatus, including the three phase resonant circuits and the three second inductors can be located on a primary side of the three-phase transformer. In comparison with LLC resonance located on a secondary side of the three-phase transformer, the LLC resonance on the primary side can better ensure soft switching and reduce a loss of a switching transistor, thereby improving efficiency of charging the electric vehicle by the charging pile.

For beneficial effect that is not described in detail in the second aspect, refer to the beneficial effect in the first aspect. Details are not described herein again.

### BRIEF DESCRIPTION OF DRAWINGS

FIG. 1 is a diagram of a scenario in which an electric vehicle is charged via a charging pile according to an embodiment of this application;
FIG. 2 is a circuit connection diagram of an example of the charging pile shown in FIG. 1 according to an embodiment of this application;
FIG. 3 is a schematic of a structure of a bidirectional DC-DC conversion apparatus according to an embodiment of this application;
FIG. 4 and FIG. 5 are schematics of structures of other bidirectional DC-DC conversion apparatuses according to an embodiment of this application;
FIG. 6 to FIG. 8 are schematics of specific structures of examples of the bidirectional DC-DC conversion apparatus shown in FIG. 4 according to an embodiment of this application; and
FIG. 9 is a diagram of a structure of a charging pile according to an embodiment of this application.

### DESCRIPTION OF EMBODIMENTS

For ease of understanding of embodiments of this application, the following descriptions are first provided before embodiments of this application are described.

In the descriptions of embodiments of this application, a connection may be an electrical connection. The electrical connection may be understood as that signal transmission is implemented between two electrical elements through a direct electrical connection or an indirect electrical connection. For example, that A is electrically connected to B may be understood as that A is directly electrically connected to B, or may be understood as that A is indirectly electrically connected to B via one or more other electrical elements.

The terms "first" and "second" in embodiments of this application are merely intended for a purpose of description, and shall not be understood as an indication or implication of relative importance or implicit indication of a quantity of indicated technical features. Therefore, a feature defined by "first" or "second" may explicitly or implicitly include one or more features. In addition, in the descriptions of embodiments of this application, "a plurality of" means two or more, and "at least one" and "one or more" mean one, two, or more.

In the descriptions of embodiments of this application, unless otherwise specified, "and/or" describes only an association relationship between associated objects and indicates that three relationships may exist. For example, A and/or B may indicate the following three cases: Only A exists, both A and B exist, and only B exists.

The following describes technical solutions of this application with reference to accompanying drawings.

First, for ease of understanding the technical solutions provided in embodiments of this application, an application scenario to which embodiments of this application are applicable is first described.

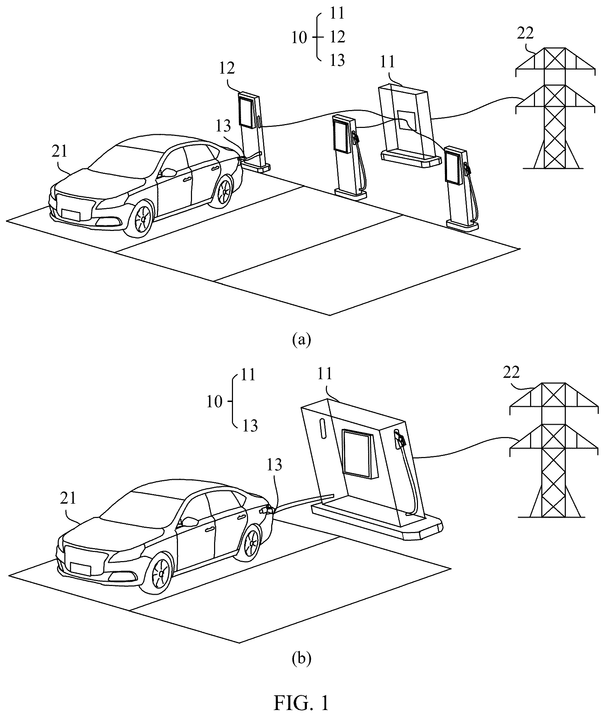

FIG. 1 is a diagram of a scenario in which an electric vehicle 21 is charged via a charging pile 10 according to an embodiment of this application.

With reference to (a) and (b) in FIG. 1, the charging pile 10 is configured to: receive an alternating current output by a power grid 22, convert the alternating current into a stable direct current, and transmit the stable direct current to the electric vehicle 21, to charge the electric vehicle 21.

In some embodiments, as shown in (a) in FIG. 1, the charging pile 10 is a split-type charging pile. Specifically, the charging pile 10 includes a charging power unit 11, one or more charging terminals 12, and one or more charging connectors 13.

The charging power unit 11 includes a plurality of power conversion apparatuses (not shown in the figure). The plurality of power conversion apparatuses are configured to convert an alternating current output by the power grid 22 into a stable direct current, and transmit the stable direct current to the charging terminal 12. The plurality of power conversion apparatuses may include, for example, a plurality of alternating current-direct current (alternating current-direct current, AC-DC) conversion apparatuses and a plurality of DC-DC conversion apparatuses. Specific descriptions of the AC-DC conversion apparatus and the DC-DC conversion apparatus are described below. Details are not described herein.

Each charging terminal 12 is connected to at least one of the one or more charging connectors 13, and each charging connector 13 is configured to connect to the electric vehicle 21. Each charging terminal 12 is configured to transmit the direct current output by the plurality of power conversion apparatuses to the electric vehicle 21 via the connected charging connector 13. During specific implementation, one electric vehicle 21 may be connected to the one or more charging connectors 13.

It should be understood that, in this embodiment of this application, the charging terminal 12 may include a cabinet body, a human-machine interaction interface, a charging control unit, a metering and billing unit, and the like, to perform information exchange, energy transmission, metering and billing, and the like with the electric vehicle 21.

It should be further understood that, in this embodiment of this application, the electric vehicle 21 is a transportation tool driven by electric energy. The electric vehicle 21 is a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), or the like.

In some other embodiments, as shown in (b) in FIG. (1), the charging pile 10 is an integral charging pile. Specifically, a human-machine interaction interface, a charging control unit, a metering and billing unit, and the like of the charging pile 10 are directly disposed in the charging power unit 11, so that the charging pile 10 may include the charging power unit 11 and the charging connector 13 connected to the charging power unit 11, but does not include the charging terminal 12. During specific implementation, the plurality of power conversion apparatuses of the charging power unit 11 convert the alternating current output by the power grid 22 into the stable direct current, and directly transmits the stable direct current to the electric vehicle 21 via the charging connector 13.

The following further describes structures of the plurality of power conversion apparatuses disposed in the charging power unit 11 by using a split-type charging pile shown in (a) in FIG. 1 as an example.

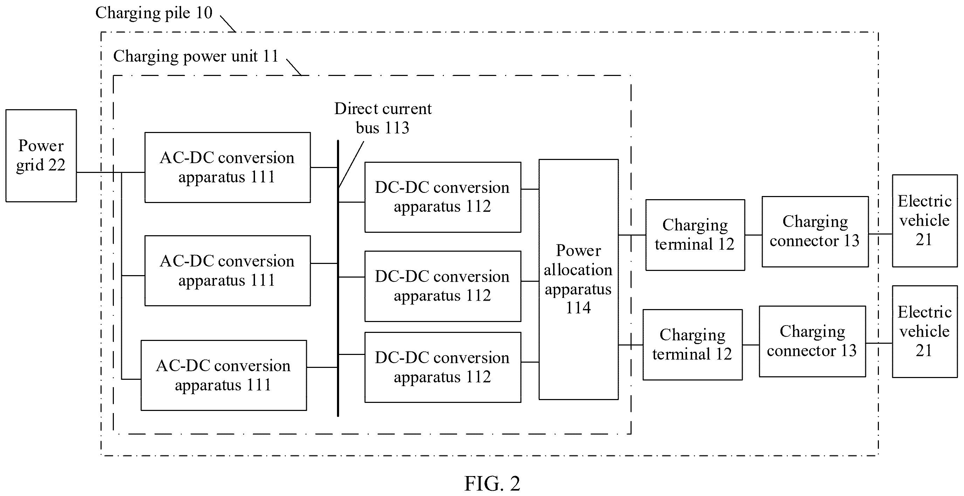

FIG. 2 is a diagram of a specific structure of an example of the charging pile 10 shown in (a) in FIG. 1 according to an embodiment of this application.

Refer to FIG. 2. In the charging pile 10, the charging power unit 11 includes a plurality of AC-DC conversion apparatuses 111, a plurality of DC-DC conversion apparatuses 112, a direct current bus 113, and a power allocation apparatus 114. An input end of each AC-DC conversion apparatus 111 is connected to the power grid 22, and an output end of each AC-DC conversion apparatus 111 is connected to an input end of each DC-DC conversion apparatus 112 through the direct current bus 113. An output end of each DC-DC conversion apparatus 112 is connected to each charging terminal 12 of the charging pile 10 via the power allocation apparatus 114, and each charging terminal 12 is connected to the charging connector 13.

During specific implementation, each AC-DC conversion apparatus 111 is configured to: convert the alternating current output by the power grid 22 into the direct current, and output the direct current to the direct current bus 113. Each DC-DC conversion apparatus 112 is configured to: further convert the direct current obtained from the direct current bus 113 into the direct current applicable to the electric vehicle 21, and output the direct current to the power allocation apparatus 114. The power allocation apparatus 114 is configured to: dynamically allocate, based on charging power actually required by the electric vehicle 21, the direct current output by each DC-DC conversion apparatus 112, and transmit the allocated power to the charging connector 13 via the charging terminal 12, so that power output by the charging connector 13 to the electric vehicle 21 meets a charging requirement of the electric vehicle 21.

As described in the foregoing background, to meet requirements in which the electric vehicle 21 is charged via the charging pile 10 and the electric vehicle 21 discharges to the power grid 22 via the charging pile 10, the AC-DC conversion apparatus 111 and the DC-DC conversion apparatus 112 of the charging pile 10 respectively use a bidirectional AC-DC conversion apparatus and a bidirectional DC-DC conversion apparatus that can implement bidirectional transmission of electric energy. When the electric vehicle 21 is charged via the charging pile 10, the bidirectional AC-DC conversion apparatus and the bidirectional DC-DC conversion apparatus operate forward. For specific descriptions about the forward operation of the bidirectional AC-DC conversion apparatus and the bidirectional DC-DC conversion apparatus, refer to the foregoing descriptions. Details are not described herein again.

When the electric vehicle 21 discharges to the power grid 22 via the charging pile 10, the bidirectional AC-DC conversion apparatus and the bidirectional DC-DC conversion apparatus operate reversely. The bidirectional DC-DC conversion apparatus is configured to: perform power conversion on the direct current output by the electric vehicle 21, and output a converted direct current to the direct current bus 113. The bidirectional AC-DC conversion apparatus is configured to: convert the direct current obtained from the direct current bus 113 into the alternating current, and output the alternating current to the power grid 22.

Currently, there are a plurality of types of electric vehicles in the market. Different types of electric vehicles 21 differ greatly in voltages during charging and during discharging. Therefore, to meet charging and discharging requirements of different types of electric vehicles 21, the bidirectional DC-DC conversion apparatus of the charging pile 10 needs to meet a requirement of the bidirectional transmission of the electric energy in a wide voltage range. However, most of bidirectional DC-DC conversion apparatuses used by the current charging pile 10 are bidirectional circuit topologies formed by replacing diodes in conventional three phase inductor-inductor-capacitor (inductor-inductor-capacitor) LLC resonant unidirectional charging circuits with switching transistors. When the bidirectional circuit topology operates reversely, that is, when the electric vehicle 21 discharges to the power grid via the charging pile 10, a circuit characteristic of the bidirectional circuit topology is degraded from an LLC resonance characteristic to an LC resonance characteristic. Because a maximum gain of an LC resonant voltage is 1, the bidirectional circuit topology cannot achieve a boosted output when operating reversely, and a voltage regulation range of the bidirectional circuit topology is greatly narrowed. As a result, the requirement of the bidirectional transmission of the electric energy in the wide voltage range cannot be well met.

Based on the foregoing content, embodiments of this application provide a bidirectional DC-DC conversion apparatus and a charging pile including the bidirectional DC-DC conversion apparatus, to improve a voltage regulation range and power conversion efficiency of the bidirectional DC-DC conversion apparatus during bidirectional transmission of electric energy, thereby achieving an efficient input or output in a wide voltage range.

The following first describes the bidirectional DC-DC conversion apparatus provided in embodiments of this application with reference to the accompanying drawings. It should be noted that the bidirectional DC-DC conversion apparatus provided in embodiments of this application may be applied to a charging pile and devices such as a power module of a charging station, an on-board charger of an electric vehicle, and a charging module in an energy storage scenario. For ease of description and understanding, the following embodiment is described by using an example in which the bidirectional DC-DC conversion apparatus is applied to the charging pile.

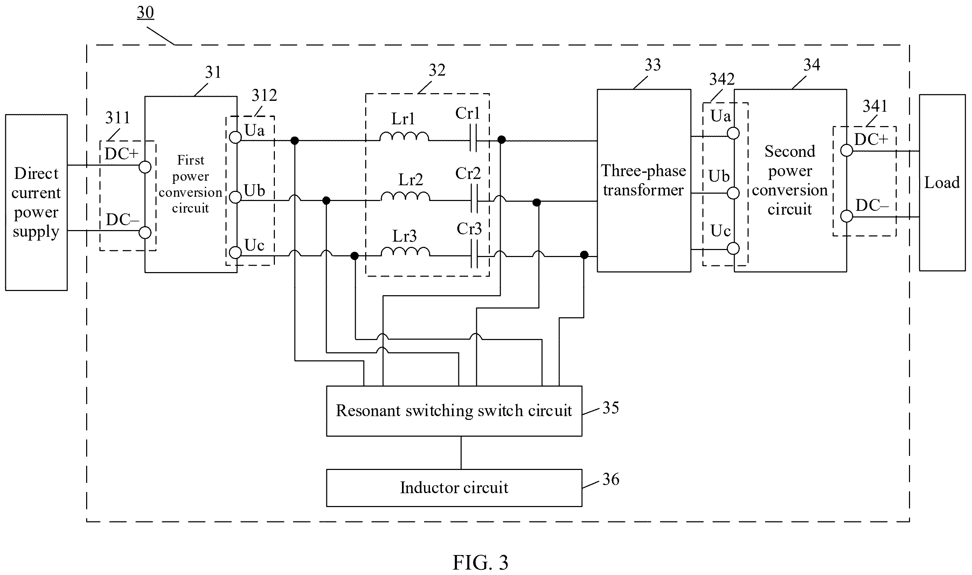

FIG. 3 is a schematic of a structure of a bidirectional DC-DC conversion apparatus 30 according to an embodiment of this application.

Refer to FIG. 3. The bidirectional DC-DC conversion apparatus 30 includes a first power conversion circuit 31, three phase resonant circuits 32, a three-phase transformer 33, and a second power conversion circuit 34. Each phase of resonant circuit of the three phase resonant circuits 32 includes a first capacitor and a first inductor that are connected in series, that is, the three phase resonant circuits 32 are three phase LC resonant circuits. One end of each phase of resonant circuit is connected to the first power conversion circuit 31, and the other end of each phase of resonant circuit is connected to the second power conversion circuit 34 via the three-phase transformer 33. In this way, the first power conversion circuit 31 can be connected to the second power conversion circuit 34 via the three phase resonant circuits 32 and the three-phase transformer 33.

It should be understood that, during specific implementation, the first power conversion circuit 31 includes a direct current connection end 311 and three phase alternating current connection ends 312, and the second power conversion circuit 34 includes a direct current connection end 341 and three phase alternating current connection ends 342. The direct current connection end 311 of the first power conversion circuit 31 and the direct current connection end 341 of the second power conversion circuit 34 are used as two connection ends of the bidirectional DC-DC conversion apparatus 30. One of the two connection ends is used to connect to a direct current power supply, and the other connection end is used to connect to a load. The direct current power supply may be, for example, the direct current bus 113 shown in FIG. 2, and the load may be, for example, the electric vehicle 21 shown in FIG. 2.

It should be noted that, for ease of description and understanding, this embodiment of this application is described by using an example in which the direct current connection end 311 of the first power conversion circuit 31 is configured to connect to the direct current power supply, and the direct current connection end 341 of the second power conversion circuit 34 is configured to connect to the load.

For example, the three phase resonant circuits 32 include a phase-A resonant circuit, a phase-B resonant circuit, and a phase-C resonant circuit. The phase-A resonant circuit includes a first capacitor Cr1 and a first inductor Lrl that are connected in series. The phase-B resonant circuit includes a first capacitor Cr2 and a first inductor Lr2 that are connected in series. The phase-C resonant circuit includes a first capacitor Cr3 and a first inductor Lr3 that are connected in series. Ends of the phase-A resonant circuit, the phase-B resonant circuit, and the phase-C resonant circuit are connected to a phase-A alternating current connection end Ua, a phase-B alternating current connection end Ub, and a phase-C alternating current connection end Uc of the three phase alternating current connection ends 312 of the first power conversion circuit 31 in a one-to-one correspondence. The other ends of the phase-A resonant circuit, the phase-B resonant circuit, and the phase-C resonant circuit are connected to a phase-A alternating current connection end Ua, a phase-B alternating current connection end Ub, and a phase-C alternating current connection end Uc of the three phase alternating current connection ends 342 of the second power conversion circuit 34 in a one-to-one correspondence via the three-phase transformer 33. In this way, the first power conversion circuit 31 can transmit electric energy to each other with the second power conversion circuit 34 via the three phase resonant circuits 32 and the three-phase transformer 33.

Based on the foregoing design, when the load is charged via the direct current power supply, the direct current connection end 311 of the first power conversion circuit 31 is used as an input end of the bidirectional DC-DC conversion apparatus 30, and the direct current connection end 341 of the second power conversion circuit 34 is used as an output end of the bidirectional DC-DC conversion apparatus 30. The first power conversion circuit 31 is configured to: convert a direct current output by the direct current power supply into an alternating current, and output the alternating current to the three-phase transformer 33 via the three phase resonant circuits 32. The second power conversion circuit 34 is configured to: convert the alternating current output by the three-phase transformer 33 into a direct current, and output the direct current to the load. To be specific, the electric energy flows from the first power conversion circuit 31 to the second power conversion circuit 34, the first power conversion circuit 31 is configured to perform inversion, and the second power conversion circuit 34 is configured to perform rectification.

Alternatively, when the load discharges to the direct current power supply, the direct current connection end 341 of the second power conversion circuit 34 is used as an input end of the bidirectional DC-DC conversion apparatus 30, and the direct current connection end 311 of the first power conversion circuit 31 is used as an output end of the bidirectional DC-DC conversion apparatus 30. The electric energy flows from the second power conversion circuit 34 to the first power conversion circuit 31, the second power conversion circuit 34 is configured to perform inversion, and the first power conversion circuit 31 is configured to perform rectification.

It should be noted that, for ease of description and understanding, in this embodiment of this application, that the electric energy flows from the first power conversion circuit 31 to the second power conversion circuit 34 is referred to as forward transmission of the electric energy in the bidirectional DC-DC conversion apparatus 30, and that the electric energy flows from the second power conversion circuit 34 to the first power conversion circuit 31 is referred to as reverse transmission of the electric energy in the bidirectional DC-DC conversion apparatus 30.

Still refer to FIG. 3. The bidirectional DC-DC conversion apparatus 30 further includes a resonant switching switch circuit 35 and an inductor circuit 36. Two ends of each phase of resonant circuit of the three phase resonant circuits 32 are connected to the inductor circuit 36 via the resonant switching switch circuit 35. The resonant switching switch circuit 35 is configured to connect a circuit between either of the two ends of each phase of resonant circuit 32 and the inductor circuit 36, to enable each phase of resonant circuit 32 and the inductor circuit 36 to form an LLC resonant circuit.

It should be understood that, in this embodiment of this application, the inductor circuit 36 may include a plurality of second inductors. In this way, when the resonant switching switch circuit 35 connects the circuit between either of the two ends of each phase of resonant circuit 32 and the inductor circuit 36, the first inductor and the first capacitor that are connected in series in each phase of resonant circuit and the second inductor of the inductor circuit 36 may form the LLC resonant circuit.

A specific structure of the LLC resonant circuit constituted by each phase of resonant circuit based on the resonant switching switch circuit 35 and the second inductor of the inductor circuit 36 is described below. Details are not described herein.

Based on the foregoing design, when the electric energy is transmitted from the first power conversion circuit 31 to the second power conversion circuit 34 via the three phase resonant circuits 32, or when the electric energy is transmitted from the second power conversion circuit 34 to the first power conversion circuit 31 via the three phase resonant circuits 32, that is, when the electric energy is transmitted forward or reversely in the bidirectional DC-DC conversion apparatus 30, a circuit between the inductor circuit 36 and either end that is of the two ends of each phase of resonant circuit and that is used as an output can be connected via the resonant switching switch circuit 35, so that the electric energy flows to the inductor circuit 36 through the first capacitor and the first inductor that are connected in series, and each phase of resonant circuit and the inductor circuit form the LLC resonant circuit. Because a voltage gain of the LLC resonant circuit may be less than or equal to 1, or may be greater than 1, the bidirectional DC-DC conversion apparatus 30 can implement voltage reduction and voltage boosting, thereby improving a voltage regulation range of the bidirectional DC-DC conversion apparatus 30 during bidirectional transmission of the electric energy. In addition, the LLC resonant circuit has a small input/output undulating current and high power density, and can implement soft switching. Therefore, power conversion efficiency of the bidirectional DC-DC conversion apparatus 30 during the bidirectional transmission of the electric energy can be further improved. In this way, the bidirectional DC-DC conversion apparatus 30 can achieve an efficient input or output in a wide voltage range.

The specific structure of the LLC resonant circuit constituted by each phase of resonant circuit based on the resonant switching switch circuit 35 and the second inductor of the inductor circuit 36 is described below.

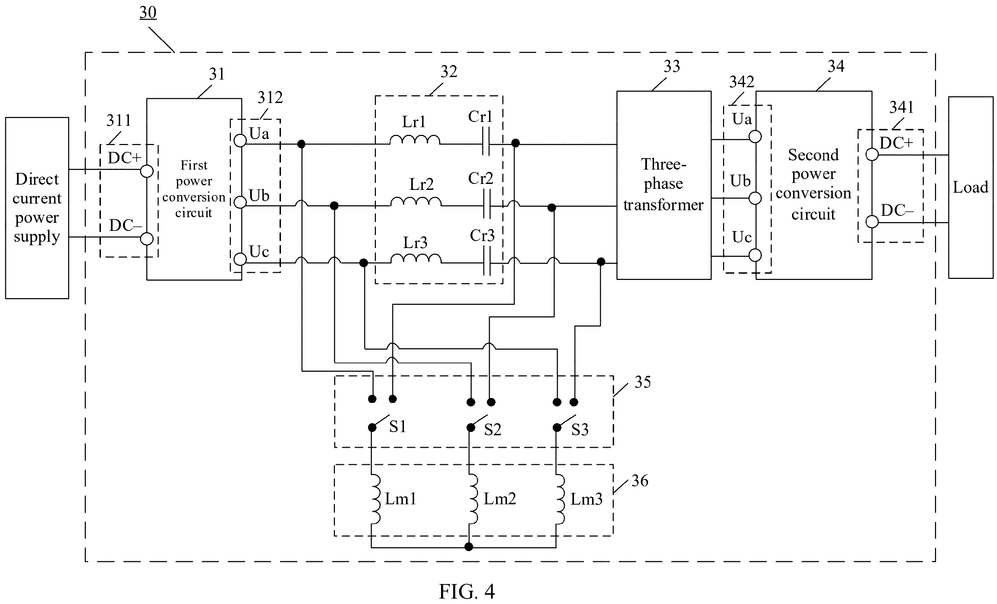

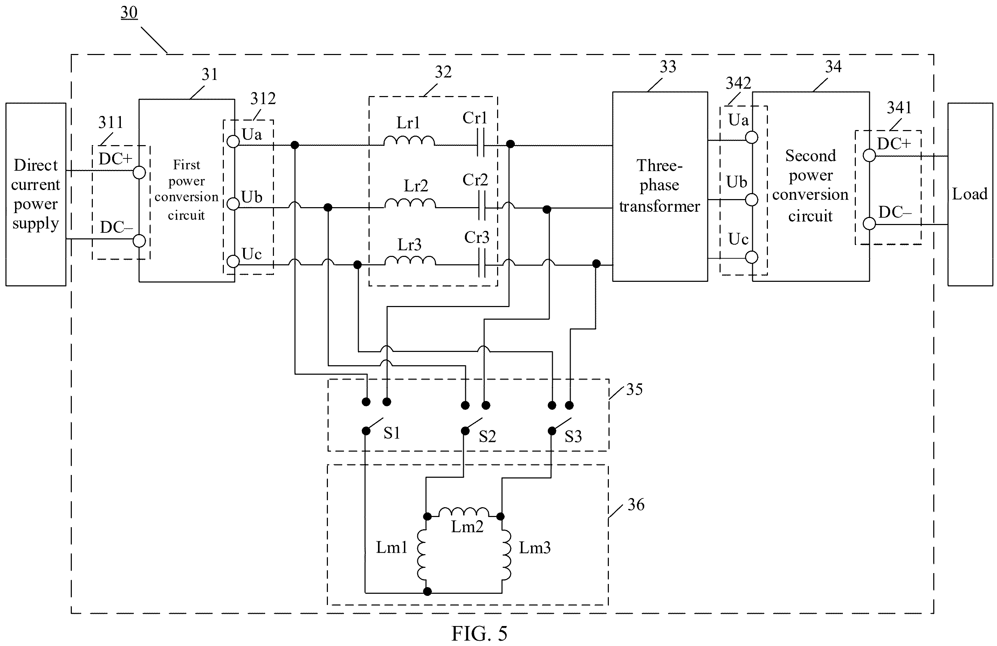

FIG. 4 and FIG. 5 are diagrams of structures of other bidirectional DC-DC conversion apparatuses 30 according to an embodiment of this application.

In some embodiments, with reference to FIG. 4 and FIG. 5, the inductor circuit 36 includes three second inductors. The two ends of each phase of resonant circuit of the three phase resonant circuits 32 are connected to one end of one second inductor via the resonant switching switch circuit 35. In other words, the three phase resonant circuits 32 are connected to the three second inductors in a one-to-one correspondence via the resonant switching switch circuit 35.

For example, as shown in FIG. 3, the inductor circuit 36 includes a second inductor Lml, a second inductor Lm2, and a second inductor Lm3. Two ends of the phase-A resonant circuit of the three phase resonant circuits 32 are connected to the second inductor Lm1 via the resonant switching switch circuit 35, two ends of the phase-B resonant circuit are connected to the second inductor Lm2 via the resonant switching switch circuit 35, and two ends of the phase-C resonant circuit are connected to the second inductor Lm3 via the resonant switching switch circuit 35.

It should be understood that, in this embodiment of this application, the first capacitor and the first inductor may also be referred to as a resonant capacitor and a resonant inductor, and the second inductor may also be referred to as an excitation inductor.

Based on the foregoing design, the first capacitor and the first inductor that are connected in series in each phase of resonant circuit may be correspondingly connected to the one end of the second inductor of the inductor circuit 36 via the resonant switching switch circuit 35, to form the LLC resonant circuit. For example, when the resonant switching switch circuit 35 connects a circuit between either of the two ends of the phase-A resonant circuit and one end of the second inductor Lm1, the first inductor Lrl and the first capacitor Cr1 that are connected in series in the phase-A resonant circuit may be connected to the second inductor Lm1 to form the LLC resonant circuit. In addition, in comparison with a problem that an air gap size of a magnetic core of the three-phase transformer 33 is large due to integration of the excitation inductor and the three-phase transformer 33, in this embodiment of this application. The three second inductors, namely, three excitation inductors may be disposed separately from the three-phase transformer 33. This can greatly reduce the air gap size of the magnetic core of the three-phase transformer 33, thereby further improving efficiency and stability of the three-phase transformer 33.

It should be understood that, to enable the bidirectional DC-DC conversion apparatus 30 to form LLC resonance during forward transmission and reverse transmission of the electric energy, in some current solutions, the LLC resonant circuit is separately disposed between the first power conversion circuit 31 and the three-phase transformer 33, and between the second power conversion circuit 34 and the three-phase transformer 33. Alternatively, in some solutions, the LLC resonant circuit is disposed between the first power conversion circuit 31 and the three-phase transformer 33, so that on a basis of implementing the LLC resonance during the forward transmission of the electric energy, the excitation inductors are additionally disposed between the first power conversion circuit 31 and the three-phase transformer 33, and therefore the LLC resonance is implemented during the reverse transmission of the electric energy. However, a large quantity of resonant elements are used in the foregoing designs, and a resonant cavity of the bidirectional DC-DC conversion apparatus 30 has a complex structure and a large volume.

However, in this embodiment of this application, the resonant switching switch circuit 35 may enable the bidirectional DC-DC conversion apparatus 30 to form the LLC resonant circuit during the forward transmission or the reverse transmission of the electric energy. No additional LLC resonant circuit needs to be disposed between the three-phase transformer 33 and the second power conversion circuit 34, and no additional excitation inductor needs to be disposed between the first power conversion circuit 31 and the three-phase transformer 33. Further, the complexity and volume of the structure of the resonant cavity of the bidirectional DC-DC conversion apparatus 30 can be further reduced.

In an embodiment, still with reference to FIG. 4 and FIG. 5, the resonant switching switch circuit 35 includes three resonant switching switches, and two ends of each phase of resonant circuit of the three phase resonant circuits 32 are connected to one end of one second inductor of the inductor circuit 36 via one resonant switching switch.

Specifically, in an example, as shown in FIG. 4, the two ends of each phase of resonant circuit are connected to two stationary contacts of the resonant switching switch in a one-to-one correspondence, the one end of the second inductor is connected to a moving contact of the resonant switching switch, and the other ends of the three second inductors are connected. In other words, each resonant switching switch may be a single pole double throw switch.

For example, the inductor circuit 36 shown in FIG. 4 includes the second inductor Lm1, the second inductor Lm2, and the second inductor Lm3, and the resonant switching switch circuit 35 includes a resonant switching switch S1, a resonant switching switch S2, and a resonant switching switch S3. The two ends of the phase-A resonant circuit of the three phase resonant circuits 32 are connected to two stationary contacts of the resonant switching switch S1 in a one-to-one correspondence, the two ends of the phase-B resonant circuit and one end of the second inductor Lm2 are connected to two stationary contacts and one moving contact of the resonant switching switch S2 in a one-to-one correspondence, and the two ends of the phase-C resonant circuit and one end of the second inductor Lm3 are connected to two stationary contacts and one moving contact of the resonant switching switch S3 in a one-to-one correspondence. In addition, the other end of the second inductor Lm1, the other end of the second inductor Lm2, and the other end of the second inductor Lm3 are connected. In other words, the second inductor Lm1, the second inductor Lm2, and the second inductor Lm3 are connected by using a star connection.

Based on the foregoing design, when the electric energy is transmitted forward or reversely in the bidirectional DC-DC conversion apparatus 30, a circuit between the corresponding second inductor and one end that is of each phase of resonant circuit and that is used as the output can be connected by connecting a moving contact of each resonant switching switch to either of two stationary contacts of the resonant switching switch. Further, each phase of resonant circuit of the three phase resonant circuits 32 and the corresponding second inductor may form the LLC resonance. In addition, the three second inductors are connected by using the star connection, so that the bidirectional DC-DC conversion apparatus 30 is applicable to an application scenario in which a high voltage and a small current are required.

In another example, as shown in FIG. 5, the two ends of each phase of resonant circuit are connected to two stationary contacts of one resonant switching switch in a one-to-one correspondence, the three second inductors of the inductor circuit 36 are sequentially connected end-to-end, and a connection point between a second inductor and another second inductor may be used as one end of the second inductor and connected to a moving contact of the resonant switching switch.

For example, the inductor circuit 36 shown in FIG. 5 includes the second inductor Lm1, the second inductor Lm2, and the second inductor Lm3, and the resonant switching switch circuit 35 also includes the resonant switching switch S1, the resonant switching switch S2, and the resonant switching switch S3. The two ends of the phase-A resonant circuit are respectively connected to two stationary contacts of the resonant switching switch S1 in a one-to-one correspondence, the two ends of the phase-B resonant circuit are respectively connected to two stationary contacts of the resonant switching switch S2 in a one-to-one correspondence, and the two ends of the phase-C resonant circuit are respectively connected to two stationary contacts of the resonant switching switch S3 in a one-to-one correspondence. The second inductor Lm1, the second inductor Lm2, and the second inductor Lm3 are sequentially connected end-to-end, a connection point between the second inductor Lm1 and the second inductor Lm3 is used as the one end of the second inductor Lm1 and is connected to the moving contact of the resonant switching switch S1, a connection point between the second inductor Lm1 and the second inductor Lm2 is used as the one end of the second inductor Lm2 and is connected to the moving contact of the resonant switching switch S2, and a connection point between the second inductor Lm2 and the second inductor Lm3 is used as the one end of the second inductor Lm3 and is connected to the resonant switching switch S3. In other words, the three second inductors are connected by using a delta connection.

Based on the foregoing design, when the electric energy is transmitted forward or reversely in the bidirectional DC-DC conversion apparatus 30, a circuit between the corresponding second inductor and one end that is of each phase of resonant circuit and that is used as the output can be connected by connecting a moving contact of each resonant switching switch to either of two stationary contacts of the resonant switching switch. Further, each phase of resonant circuit of the three phase resonant circuits 32 and the corresponding second inductor may form the LLC resonance. In addition, the three second inductors are connected by using the delta connection, so that the bidirectional DC-DC conversion apparatus 30 is applicable to an application scenario in which a low voltage and a large current are required.

It should be understood that, the resonant switching switch being the single pole double throw switch is merely an example. For example, in some other embodiments, the resonant switching switch may alternatively be another component, for example, a relay or a semiconductor switching component, that can switch connection of the circuit between each phase of resonant circuit and the corresponding second inductor.

It should be further understood that, in this embodiment of this application, three first inductors of the three phase resonant circuits 32, that is, the first inductor Lr1, the first inductor Lr2, and the first inductor Lr3, are disposed in an integrated manner. The three second inductors, that is, the second inductor Lm1, the second inductor Lm2, and the second inductor Lm3, are integrated. Alternatively, the first inductor Lr1 and the second inductor Lm1 are integrated, the first inductor Lr2 and the second inductor Lm2 are integrated, and the first inductor Lr3 and the second inductor Lm3 are integrated.

During specific implementation, in some embodiments, with reference to FIG. 3 to FIG. 5, the resonant switching switch circuit 35 is configured to: when the first power conversion circuit 31 is configured to convert a received direct current into an alternating current, and the second power conversion circuit 34 is configured to convert the alternating current output by the first power conversion circuit 31 into a direct current for output, connect a circuit between the inductor circuit 36 and the other end that is of the two ends of each phase of resonant circuit and that is connected to the three-phase transformer 33.

Specifically, an example in which the inductor circuit 36 shown in FIG. 4 and FIG. 5 includes the second inductor Lm1, the second inductor Lm2, and the second inductor Lm3 is used. When the electric energy is transmitted from the first power conversion circuit 31 to the second power conversion circuit 34, right ends that are of two ends of the phase-A resonant circuit, the phase-B resonant circuit, and the phase-C resonant circuit and that are connected to the three-phase transformer 33 are used as an output end of each phase of resonant circuit. In this case, the resonant switching switch S1, the resonant switching switch S2, and the resonant switching switch S3 of the resonant switching switch circuit 35 may be respectively configured to connect a circuit between a right end of the phase-A resonant circuit and the second inductor Lm1, a circuit between a right end of the phase-B resonant circuit and the second inductor Lm2, and a circuit between a right end of the phase-C resonant circuit and the second inductor Lm3. In this way, electric energy output from the phase-A resonant circuit, the phase-B resonant circuit, and the phase-C resonant circuit may flow to the correspondingly connected second inductors and the three-phase transformer 33, so that when the electric energy is transmitted forward in the bidirectional DC-DC conversion apparatus 30, the first capacitor and the first inductor connected in series in each phase of resonant circuit and the correspondingly connected second inductor may form the LLC resonant circuit.

In some other embodiments, the resonant switching switch circuit 35 is configured to: when the electric energy is transmitted from the second power conversion circuit 34 to the first power conversion circuit 31, and the second power conversion circuit 34 is configured to convert a received direct current into an alternating current, and the first power conversion circuit is configured to convert the alternating current output by the second power conversion circuit into a direct current for output, connect a circuit between the inductor circuit 36 and the one end that is of the two ends of each phase of resonant circuit and that is connected to the first power conversion circuit 31.

Specifically, an example in which the inductor circuit 36 shown in FIG. 4 and FIG. 5 includes the second inductor Lm1, the second inductor Lm2, and the second inductor Lm3 is still used. When the electric energy is transmitted from the second power conversion circuit 34 to the first power conversion circuit 31, left ends that are of two ends of the phase-A resonant circuit, the phase-B resonant circuit, and the phase-C resonant circuit and that are connected to the first power conversion circuit 31 are used as an output end of each phase of resonant circuit. In this case, the resonant switching switch S1, the resonant switching switch S2, and the resonant switching switch S3 of the resonant switching switch circuit 35 may be respectively configured to connect a circuit between a left end of the phase-A resonant circuit and the second inductor Lm1, a circuit between a left end of the phase-B resonant circuit and the second inductor Lm2, and a circuit between a left end of the phase-C resonant circuit and the second inductor Lm3. In this way, electric energy output from the phase-A resonant circuit, the phase-B resonant circuit, and the phase-C resonant circuit may flow to the correspondingly connected second inductors and the first power conversion circuit 31, so that when the electric energy is transmitted reversely in the bidirectional DC-DC conversion apparatus 30, the first capacitor and the first inductor connected in series in each phase of resonant circuit and the correspondingly connected second inductor may also form the LLC resonant circuit.

Based on the foregoing design, when the electric energy is transmitted forward or reversely in the bidirectional DC-DC conversion apparatus 30, the circuit between the corresponding second inductor and either end that is of the two ends of each phase of resonant circuit and that is used as the output can be connected, to ensure that the LLC resonant circuit is formed when the electric energy is transmitted forward or reversely in the bidirectional DC-DC conversion apparatus 30.

The inductor circuit 36 of the bidirectional DC-DC conversion apparatus 30 and the structure of the resonant switching switch circuit 35 connected to the inductor circuit 36 are described above. The following describes another circuit structure of the bidirectional DC-DC conversion apparatus 30 by using an example in which the three second inductors shown in FIG. 4 are connected by using the star connection.

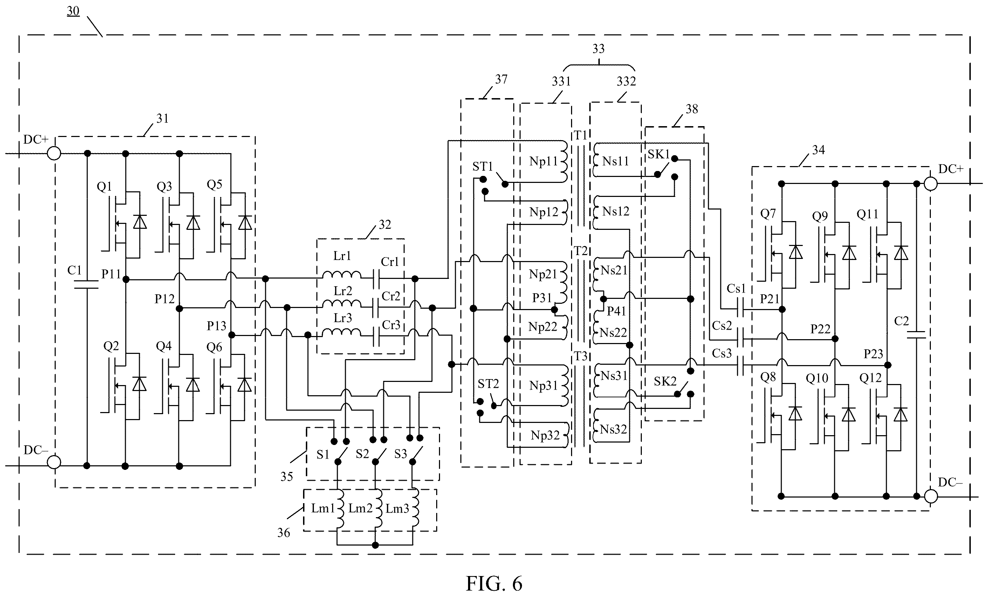

FIG. 6 is a schematic of a specific circuit structure of an example of the bidirectional DC-DC conversion apparatus 30 shown in FIG. 3 according to an embodiment of this application.

In some embodiments, refer to FIG. 6. The first power conversion circuit 31 includes three first power conversion bridge arms connected in parallel, and each first power conversion bridge arm includes two switching transistors connected in series. Two ends of the three first power conversion bridge arms connected in parallel are used as the direct current connection end 311 of the first power conversion circuit 31, a series connection point of the two switching transistors of each first power conversion bridge arm is used as a bridge arm midpoint of the first power conversion bridge arm, and three bridge arm midpoints of the three first power conversion bridge arms are used as the three phase alternating current connection ends 312 of the first power conversion circuit 31, to be connected to the three phase resonant circuits 32.

For example, as shown in FIG. 6, the three first power conversion bridge arms include: a switching transistor Q1 and a switching transistor Q2 that are connected in series, a switching transistor Q3 and a switching transistor Q4 that are connected in series, and a switching transistor Q5 and a switching transistor Q6 that are connected in series. A bridge arm midpoint P11, a bridge arm midpoint P12, and a bridge arm midpoint P13 of the three first power conversion bridge arms are used as the three phase alternating current connection ends 312 of the first power conversion circuit 31.

In an example, the first power conversion circuit 31 further includes a capacitor C1. The capacitor C1 is connected in parallel to the three first power conversion bridge arms, and the capacitor C1 is configured to filter a direct current received by the direct current connection end 311 of the first power conversion circuit 31.

In some embodiments, still refer to FIG. 6. Similar to the first power conversion circuit 31, the second power conversion circuit 34 includes three second power conversion bridge arms connected in parallel, and each second power conversion bridge arm includes two switching transistors connected in series. Two ends of the three second power conversion bridge arms connected in parallel are used as the direct current connection end 341 of the second power conversion circuit 34, and three bridge arm midpoints of the three second power conversion bridge arms are used as the three phase alternating current connection ends 342 of the second power conversion circuit 34, to be connected to the three-phase transformer 33.

For example, as shown in FIG. 6, the three second power conversion bridge arms include: a switching transistor Q7 and a switching transistor Q8 that are connected in series, a switching transistor Q9 and a switching transistor Q10 that are connected in series, and a switching transistor Q11 and a switching transistor Q12 that are connected in series. A bridge arm midpoint P21, a bridge arm midpoint P22, and a bridge arm midpoint P23 of the three second power conversion bridge arms are used as the three phase alternating current connection ends 342 of the second power conversion circuit 34.

In an example, the second power conversion circuit 34 further includes a capacitor C2. The capacitor C2 is connected in parallel to the three second power conversion bridge arms, and the capacitor C2 is configured to filter a direct current output by the direct current connection end 341 of the second power conversion circuit 34.

In some embodiments, still refer to FIG. 6. The bidirectional DC-DC conversion apparatus 30 further includes a plurality of second capacitors, and the second power conversion circuit 34 includes three second power conversion bridge arms connected in parallel. A midpoint of each second power conversion bridge arm is connected to the three-phase transformer 33 via one second capacitor, and second capacitors connected to midpoints of the second power conversion bridge arms are different.

For example, as shown in FIG. 6, the bidirectional DC-DC conversion apparatus 30 further includes a second capacitor Cs1, a second capacitor Cs2, and a second capacitor Cs3, and the bridge arm midpoint P21, the bridge arm midpoint P22, and the bridge arm midpoint P23 of the three second power conversion bridge arms are connected to the three-phase transformer 33 respectively via the second capacitor Cs1, the second capacitor Cs2, and the second capacitor Cs3.

Based on the foregoing design, when the electric energy is reversely transmitted in the bidirectional DC-DC conversion apparatus 30, that is, when the electric energy is transmitted from the second power conversion circuit 34 to the first power conversion circuit 31, the disposed second capacitor can prevent the magnetic core of the three-phase transformer 33 from being magnetically biased, thereby further improving the stability of the three-phase transformer 33 during operation.

In some embodiments, still refer to FIG. 6. The three-phase transformer 33 includes three phase primary-side windings 331 and three phase secondary-side windings 332, the three phase primary-side windings 331 are connected to the other ends of the three phase resonant circuits 32 in a one-to-one correspondence, and the three phase secondary-side windings 332 are connected to the three bridge arm midpoints of the second power conversion circuit 34 in a one-to-one correspondence. In this way, the three phase resonant circuits 32 may transmit the electric energy between the three-phase transformer 33 and the second power conversion circuit 34.

It should be understood that, during specific implementation, when the electric energy is transmitted forward in the bidirectional DC-DC conversion apparatus 30, the three phase primary-side windings 331 of the three-phase transformer 33 and the first power conversion circuit 31 may be referred to as a primary-side circuit of the three-phase transformer 33, and the three phase secondary-side windings 332 and the second power conversion circuit 34 may be referred to as a secondary-side circuit of the three-phase transformer 33. When the electric energy is transmitted reversely in the bidirectional DC-DC conversion apparatus 30, the three phase primary-side windings 331 of the three-phase transformer 33 and the first power conversion circuit 31 may be referred to as a secondary-side circuit of the three-phase transformer 33, and the three phase secondary-side windings 332 and the second power conversion circuit 34 may be referred to as a primary-side circuit of the three-phase transformer 33.

In some embodiments, still with reference to FIG. 6, the bidirectional DC-DC conversion apparatus 30 further includes at least one of a first turn-quantity switching switch circuit 37 and a second turn-quantity switching switch circuit 38. For example, FIG. 5 exemplarily shows that the bidirectional DC-DC conversion apparatus 30 further includes the first turn-quantity switching switch circuit 37 and the second turn-quantity switching switch circuit 38.

The first turn-quantity switching switch circuit 37 is connected to the three phase primary-side windings 331, and the first turn-quantity switching switch circuit 37 is configured to switch a quantity of circuit-connected turns of each phase of primary-side winding of the three phase primary-side windings 331. The second turn-quantity switching switch circuit 38 is connected to the three phase secondary-side windings 332, and the second turn-quantity switching switch circuit 38 is configured to switch a quantity of circuit-connected turns of each phase of secondary-side winding of the three phase secondary-side windings 332.

Based on the foregoing design, when the electric energy is transmitted forward or reversely in the bidirectional DC-DC conversion apparatus 30, a circuit-connected winding turn ratio of the three-phase transformer 33 can be adjusted via the at least one of the first turn-quantity switching switch circuit 37 and the second turn-quantity switching switch circuit 38, to adjust an operating voltage range of the bidirectional DC-DC conversion apparatus 30, so that the bidirectional DC-DC conversion apparatus 30 achieves the input or output in the wide voltage range.

For example, when the direct current connection end 341 of the second power conversion circuit 34 is connected to an electric vehicle, and the electric vehicle is charged, that is, the electric energy is transmitted forward in the bidirectional DC-DC conversion apparatus 30, the circuit-connected winding turn ratio of the three-phase transformer 33 can be adjusted via the at least one of the first turn-quantity switching switch circuit 37 and the second turn-quantity switching switch circuit 38, so that the bidirectional DC-DC conversion apparatus 30 achieves the voltage output in the wide range, to meet charging voltage requirements of different electric vehicles.

In addition, when the circuit-connected winding turn ratio of the three-phase transformer 33 is switched via the at least one of the first turn-quantity switching switch circuit 37 and the second turn-quantity switching switch circuit 38, if the excitation inductors and the three-phase transformer 33 are integrated, inductance values of the excitation inductors is easily affected by switching of the turn ratio of the three-phase transformer 33, resulting in unstable operation performance of the bidirectional DC-DC conversion apparatus 30. However, in this embodiment of this application, because the three second inductors, that is, the three excitation inductors, are separately disposed from the three-phase transformer 33, when the circuit-connected winding turn ratio of the three-phase transformer 33 is switched via the at least one of the first turn-quantity switching switch circuit 37 and the second turn-quantity switching switch circuit 38, the inductance values of the three excitation inductors may not be affected by switching of the turn ratio, thereby further ensuring the operation performance of the bidirectional DC-DC conversion apparatus 30.

In some embodiments, still refer to FIG. 6. The bidirectional DC-DC conversion apparatus 30 includes the first turn-quantity switching switch circuit 37, and each phase of primary-side winding of the three phase primary-side windings 331 includes a first primary-side winding and a second primary-side winding. Ends of three first primary-side windings are connected to the other ends of the three phase resonant circuits 32 in a one-to-one correspondence, the other end of the first primary-side winding of one phase of primary-side winding is connected to one end of the second primary-side winding of the one phase of primary-side winding to form a first tap, and the other ends of three second primary-side windings are connected.

In addition, the first turn-quantity switching switch circuit includes two first turn-quantity switching switches, and the two first turn-quantity switching switches are connected to two phases of primary-side windings that are of the three phase primary-side windings 331 and that are other than the one phase of primary-side winding in a one-to-one correspondence. Each first turn-quantity switching switch is configured to connect a circuit between the other end of the first primary-side winding of one corresponding phase of primary-side winding and one end of the second primary-side winding of the corresponding phase of primary-side winding. Alternatively, each first turn-quantity switching switch is configured to connect a circuit between the other end of the first primary-side winding of the corresponding phase of primary-side winding and the first tap.

For example, as shown in FIG. 6, the three phase primary-side windings 331 of the three-phase transformer 33 include a phase-A primary-side winding, a phase-B primary-side winding, and a phase-C primary-side winding. The phase-A primary-side winding includes a first primary-side winding Np11 and a second primary-side winding Np12, the phase-B primary-side winding includes a first primary-side winding Np21 and a second primary-side winding Np22, and the phase-C primary-side winding includes a first primary-side winding Np31 and a second primary-side winding Np32. The first turn-quantity switching switch circuit 37 includes a first turn-quantity switching switch ST1 and a first turn-quantity switching switch ST2. The first turn-quantity switching switch ST1 and the first turn-quantity switching switch ST2 are single pole double throw switches respectively.

Ends of the first primary-side windings Np11, Np21, and Np31 are connected to the phase-A resonant circuit, the phase-B resonant circuit, and the phase-C resonant circuit of the three phase resonant circuits 32 in a one-to-one correspondence. The other end of the first primary-side winding Np21 of the phase-B primary-side winding is connected to one end of the second primary-side winding Np22 to form a first tap P31. The other ends of the second primary-side windings Np12, Np22, and Np32 are connected. A moving contact of the first turn-quantity switching switch ST1 is connected to the other end of the first primary-side winding Np11, and two stationary contacts of the first turn-quantity switching switch ST1 are respectively connected to one end of the second primary-side winding Np12 and the first tap P31. A moving contact of the second turn-quantity switching switch ST2 is connected to the other end of the first primary-side winding Np31, and two stationary contacts of the second turn-quantity switching switch ST2 are respectively connected to one end of the second primary-side winding Np32 and the first tap P31. In other words, the three phase primary-side windings 331 of the three-phase transformer 33 form a Y-shaped connection via the two first turn-quantity switching switches.

Based on the foregoing design, by connecting a moving contact of each first turn-quantity switching switch to either of two stationary contacts of the first turn-quantity switching switch, a quantity of circuit-connected turns of each phase of primary-side winding of the three-phase transformer 33 can be adjusted to be a sum of a quantity of turns of the first primary-side winding and a quantity of turns of the second primary-side winding, or a quantity of turns of the first primary-side winding, so that the operating voltage range of the bidirectional DC-DC conversion apparatus 30 can be adjusted, and the bidirectional DC-DC conversion apparatus 30 achieves the input or output in the wide voltage range.

In some embodiments, still refer to FIG. 6. The bidirectional DC-DC conversion apparatus 30 includes the second turn-quantity switching switch circuit 38, and each phase of secondary-side winding of the three phase secondary-side windings 332 includes a first secondary-side winding and a second secondary-side winding. Ends of three first secondary-side windings are connected to the three bridge arm midpoints P21, P22, and P23 of the second power conversion circuit 34 in a one-to-one correspondence. The other end of the first secondary-side winding of one phase of secondary-side winding is connected to one end of the second secondary-side winding of the one phase of secondary-side winding to form a second tap, and the other ends of three second secondary-side windings are connected.

In addition, the second turn-quantity switching switch circuit 38 includes two second turn-quantity switching switches, and the two second turn-quantity switching switches are connected to two phases of secondary-side windings that are of the three phase secondary-side windings 332 and that are other than the one phase of secondary-side winding in a one-to-one correspondence. Each second turn-quantity switching switch is configured to connect a circuit between the other end of the first secondary-side winding of one corresponding phase of secondary-side winding and one end of the second secondary-side winding of the corresponding phase of secondary-side winding. Alternatively, each second turn-quantity switching switch is configured to connect a circuit between the other end of the first secondary-side winding of the corresponding phase of secondary-side winding and the second tap.

For example, as shown in FIG. 6, the three phase secondary-side windings 332 of the three-phase transformer 33 include a phase-A secondary-side winding, a phase-B secondary-side winding, and a phase-C secondary-side winding. The phase-A secondary-side winding includes a first secondary-side winding Ns11 and a second secondary-side winding Ns12, the phase-B secondary-side winding includes a first secondary-side winding Ns21 and a second secondary-side winding Ns22, and the phase-C secondary-side winding includes a first secondary-side winding Ns31 and a second secondary-side winding Ns32. Ends of the first secondary-side windings Ns11, Ns21, and Ns31 are connected to the bridge arm midpoint P21, the bridge arm midpoint P22, and the bridge arm midpoint P23 of the second power conversion circuit 34 in a one-to-one correspondence. The other end of the first secondary-side winding Ns21 of the phase-B secondary-side winding is connected to one end of the second secondary-side winding Ns22 to form a second tap P41. In addition, the second turn-quantity switching switch circuit 38 includes a second turn-quantity switching switch SK1 and a second turn-quantity switching switch SK2.

It should be understood that a specific manner in which the second turn-quantity switching switch SK1 and the second turn-quantity switching switch SK2 are connected to the three phase secondary-side windings 332 is similar to a manner in which the two first turn-quantity switching switches of the first turn-quantity switching switch circuit 37 are connected to the three phase primary-side windings 331. Details are not described herein again.

Based on the foregoing design, by connecting a moving contact of each second turn-quantity switching switch to either of two stationary contacts of the second turn-quantity switching switch, a quantity of circuit-connected turns of each phase of secondary-side winding of the three-phase transformer 33 can be adjusted to be a sum of a quantity of turns of the first secondary-side winding and a quantity of turns of the second secondary-side winding, or a quantity of circuit-connected turns of each phase of secondary-side winding of the three-phase transformer 33 is adjusted to be a quantity of turns of the first secondary-side winding, so that the operating voltage range of the bidirectional DC-DC conversion apparatus 30 can be adjusted, and the bidirectional DC-DC conversion apparatus 30 achieves the input or output in the wide voltage range.

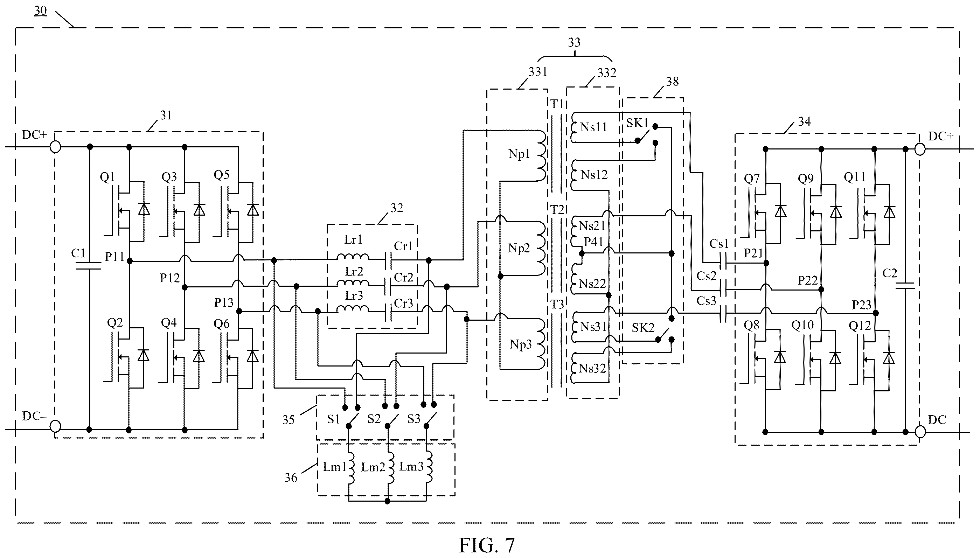

FIG. 7 is a schematic of a specific circuit structure of another example of the bidirectional DC-DC conversion apparatus 30 shown in FIG. 3 according to an embodiment of this application.

Different from the embodiment shown in FIG. 6, in the embodiment shown in FIG. 7, the bidirectional DC-DC conversion apparatus 30 may include only the second turn-quantity switching switch circuit 38, and does not include the first turn-quantity switching switch circuit 37. In this case, the three phase primary-side windings 331 of the three-phase transformer 33 include a phase-A primary-side winding Np1, a phase-B primary-side winding Np2, and a phase-C primary-side winding Np3. Ends of the phase-A primary-side winding Np1, the phase-B primary-side winding Np2, and the phase-C primary-side winding Np3 are connected to the other ends of the three phase resonant circuits 32 in a one-to-one correspondence, and the other ends of the phase-A primary-side winding Np1, the phase-B primary-side winding Np2, and the phase-C primary-side winding Np3 are connected.

It should be understood that for specific descriptions of the second turn-quantity switching switch circuit 38, refer to related descriptions of the embodiment shown in FIG. 6. Details are not described herein again.

Based on the foregoing design, when the electric energy is transmitted forward or reversely in the bidirectional DC-DC conversion apparatus 30, a quantity of circuit-connected turns of the three phase secondary-side windings 332 of the three-phase transformer 33 can be adjusted via the second turn-quantity switching switch circuit 38, to adjust the operating voltage range of the bidirectional DC-DC conversion apparatus, so that the bidirectional DC-DC conversion apparatus achieves the input or output in the wide voltage range.

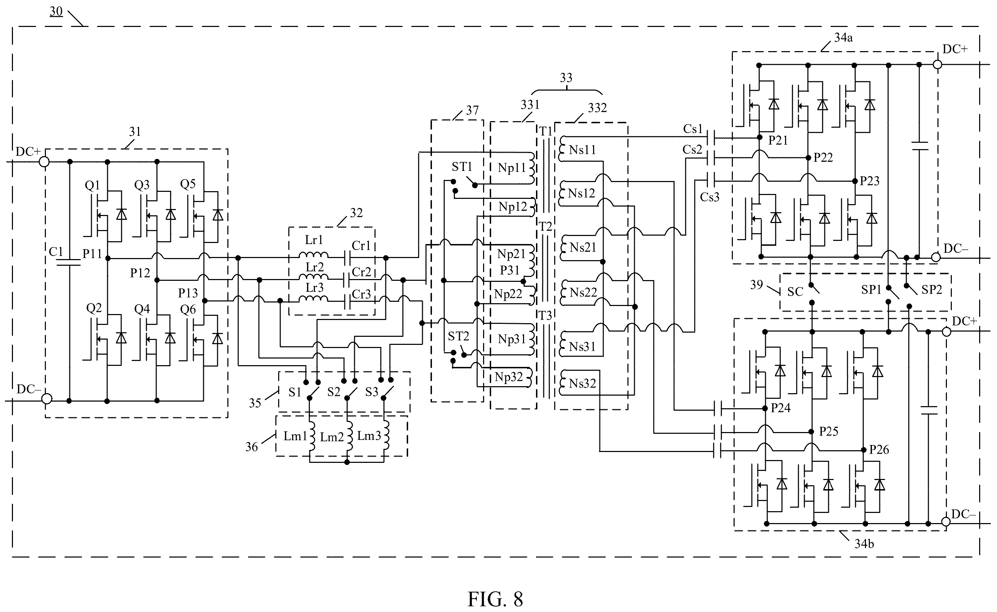

FIG. 8 is a schematic of a specific circuit structure of still another example of the bidirectional DC-DC conversion apparatus 30 shown in FIG. 3 according to an embodiment of this application.

Different from the embodiment shown in FIG. 6, in the embodiment shown in FIG. 8, the bidirectional DC-DC conversion apparatus 30 may include only the first turn-quantity switching switch circuit 37, and does not include the second turn-quantity switching switch circuit 38. For specific descriptions of the first turn-quantity switching switch circuit 37, refer to related descriptions of the embodiment shown in FIG. 5. Details are not described herein again.

In some embodiments, refer to FIG. 8. Each phase of secondary-side winding of the three phase secondary-side windings 332 may include a plurality of groups of secondary-side windings, and there may be a plurality of second power conversion circuits 34 in the bidirectional DC-DC conversion apparatus 30. The plurality of groups of secondary-side windings are connected to one bridge arm midpoint of each of the plurality of second power conversion circuits 34 in a one-to-one correspondence.

For example, FIG. 8 exemplarily shows that each phase of secondary-side winding includes two groups of secondary-side windings, and a quantity of second power conversion circuits 34 of the bidirectional DC-DC conversion apparatus 30 is two. Specifically, the three phase secondary-side windings 332 of the three-phase transformer 33 include a phase-A secondary-side winding, a phase-B secondary-side winding, and a phase-C secondary-side winding. The phase-A secondary-side winding includes a first group of secondary-side windings Ns11 and a second group of secondary-side windings Ns12, the phase-B secondary-side winding includes a first group of secondary-side windings Ns21 and a second group of secondary-side windings Ns22, and the phase-C secondary-side winding includes a first group of secondary-side windings Ns31 and a second group of secondary-side windings Ns32. The bidirectional DC-DC conversion apparatus 30 includes a second power conversion circuit 34a and a second power conversion circuit 34b.

The first group of secondary-side windings Ns11 and the second group of secondary-side windings Ns12 are connected to the bridge arm midpoint P21 of the second power conversion circuit 34a and a bridge arm midpoint P24 of the second power conversion circuit 34b in a one-to-one correspondence. The first group of secondary-side windings Ns21 and the second group of secondary-side windings Ns22 are connected to the bridge arm midpoint P22 of the second power conversion circuit 34a and a bridge arm midpoint P25 of the second power conversion circuit 34b in a one-to-one correspondence. The first group of secondary-side windings Ns31 and the second group of secondary-side windings Ns32 are connected to the bridge arm midpoint P23 of the second power conversion circuit 34a and a bridge arm midpoint P26 of the second power conversion circuit 34b in a one-to-one correspondence. In this way, the three-phase transformer 33 may separately transmit the electric energy with the second power conversion circuit 34a and the second power conversion circuit 34b.

In addition, still refer to FIG. 8. The bidirectional DC-DC conversion apparatus 30 further includes one or more connection switching switch circuits 39. Any two of the plurality of second power conversion circuits 34 are connected to each other via the connection switching switch circuit 39. Each connection switching switch circuit 39 includes one series switch and two parallel switches, the series switch is configured to connect the any two second power conversion circuits 34 in series, and the two parallel switches are configured to connect the any two second power conversion circuits 34 in parallel.

For example, an example in which the bidirectional DC-DC conversion apparatus 30 shown in FIG. 8 includes the two second power conversion circuits 34 is still used, that is, the second power conversion circuit 34a and the second power conversion circuit 34b are included. The bidirectional DC-DC conversion apparatus 30 further includes the connection switching switch circuit 39. The connection switching switch circuit 39 includes a series switch SC, a parallel switch SP1, and a parallel switch SP2. Two ends that are of three second power conversion bridge arms of the second power conversion circuit 34a and that are connected in parallel are respectively used as a positive direct current connection end DC+ and a negative direct current connection end DC- of the second power conversion circuit 34a, and two ends that are of three second power conversion bridge arms of the second power conversion circuit 34b and that are connected in parallel are respectively used as a positive direct current connection end DC+ and a negative direct current connection end DC- of the second power conversion circuit 34b.

The series switch SC is connected between the positive direct current connection end DC+ of the second power conversion circuit 34a and the negative direct current connection end DC- of the second power conversion circuit 34b. The parallel switch SP1 is connected between the positive direct current connection end DC+ of the second power conversion circuit 34a and the positive direct current connection end DC+ of the second power conversion circuit 34b, and the parallel switch SP2 is connected between the negative direct current connection end DC- of the second power conversion circuit 34a and the negative direct current connection end DC- of the second power conversion circuit 34b.

Based on the foregoing design, when the electric energy is transmitted from the first power conversion circuit 31 to the second power conversion circuit 34, the second power conversion circuit 34a and the second power conversion circuit 34b may be connected in series by turning on the series switch SC and turning off the parallel switch SP1 and the parallel switch SP2, or the second power conversion circuit 34a and the second power conversion circuit 34b may be connected in parallel by turning on the parallel switch SP1 and the parallel switch SP2 and turning off the series switch SC. In this way, an output voltage range of the second power conversion circuit 34a and the second power conversion circuit 34b can be adjusted, so that the bidirectional DC-DC conversion apparatus 30 achieves the voltage output in the wide range. In this way, when the positive direct current connection end DC+ of the second power conversion circuit 34a and the negative direct current connection end DC- of the second power conversion circuit 34b are used as the output end of the bidirectional DC-DC conversion apparatus 30 and are connected to an electric vehicle, charging voltage requirements of different electric vehicles can be better met.

For another example, when there are three second power conversion circuits 34 in the bidirectional DC-DC conversion apparatus 30, the bidirectional DC-DC conversion apparatus 30 further includes three connection switching switch circuits 39. Every two of the three second power conversion circuits 34 are connected to each other via the connection switching switch circuit 39. For specific descriptions, refer to the related descriptions that the second power conversion circuit 34a and the second power conversion circuit 34b are connected via the connection switching switch circuit 39. Details are not described herein again.

Based on the foregoing design, when the electric energy is transmitted from the first power conversion circuit 31 to the second power conversion circuit 34, that is, when the electric energy is transmitted forward in the bidirectional DC-DC conversion apparatus 30, the three second power conversion circuits 34 can be connected in series and/or in parallel via the three connection switching switch circuits 39. In this way, an output voltage range of the three second power conversion circuits 34 can be adjusted.

The foregoing describes the bidirectional DC-DC conversion apparatus 30 in embodiments of this application. The following describes a charging pile including the bidirectional DC-DC conversion apparatus 30 in embodiments of this application with reference to accompanying drawings.

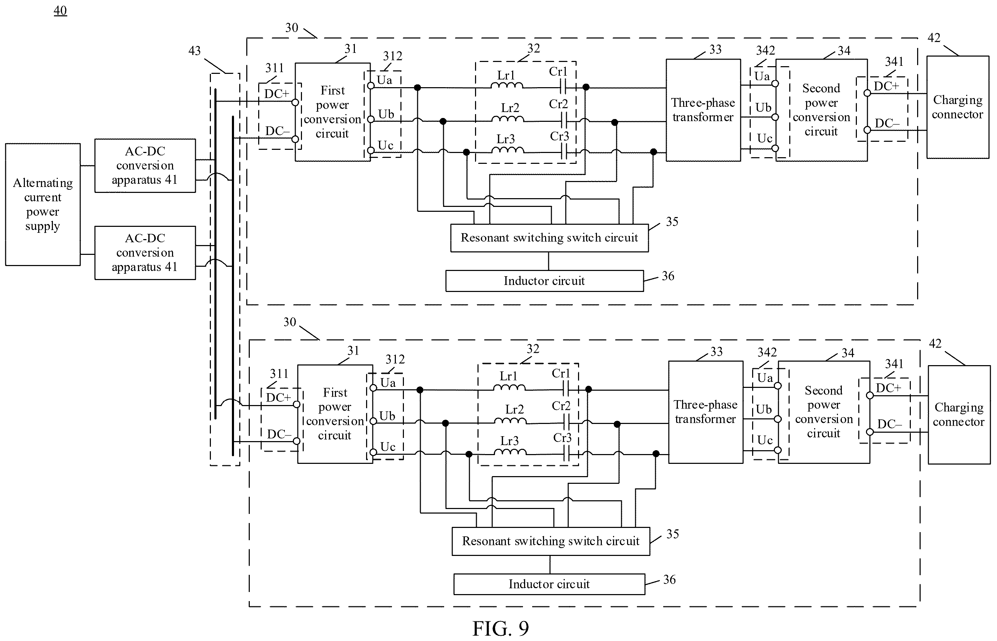

FIG. 9 is a diagram of a structure of a charging pile 40 according to an embodiment of this application.

Refer to FIG. 9. The charging pile 40 includes AC-DC conversion apparatuses 41, the bidirectional DC-DC conversion apparatuses 30 described above, and charging connectors 42. One end of the AC-DC conversion apparatus 41 is configured to connect to an alternating current power supply, and the alternating current power supply may be, for example, a power grid. The other end of the AC-DC conversion apparatus 41 is connected to the charging connector 42 via the bidirectional DC-DC conversion apparatus 30, and the charging connector 42 is configured to connect to an electric vehicle.

Based on the foregoing design, the AC-DC conversion apparatus 41 can be configured to convert an alternating current output by the alternating current power supply into a direct current, and output the direct current to the bidirectional DC-DC conversion apparatus 30. The bidirectional DC-DC conversion apparatus 30 is configured to further perform power conversion on the received direct current, and output a converted direct current to the charging connector 42, to charge the electric vehicle via the charging connector 42.

It should be understood that, in this embodiment of this application, there may be a plurality of AC-DC conversion apparatuses 41 and a plurality of DC-DC conversion apparatuses 30, the other ends of the plurality of AC-DC conversion apparatuses 41 are connected to ends of the plurality of DC-DC conversion apparatuses 30 in a one-to-one correspondence, and the other ends of the plurality of DC-DC conversion apparatuses 30 are connected to the charging connector 42. Alternatively, as shown in FIG. 9, the charging pile 40 further includes a direct current bus 43, the other end of each AC-DC conversion apparatus 41 is connected to the one end of each bidirectional DC-DC conversion apparatus 30 through the direct current bus 43, and the other end of each bidirectional DC-DC conversion apparatus 30 is connected to the charging connector 42.

In some embodiments, refer to FIG. 9. The direct current connection end 311 of the first power conversion circuit 31 of the bidirectional DC-DC conversion apparatus 30 is connected to the other end of the AC-DC conversion apparatus 41, and the direct current connection end 311 of the first power conversion circuit 31 may be connected to, for example, the direct current bus 43, to be connected to the other end of the AC-DC conversion apparatus 41 through the direct current bus 43. The direct current connection end 341 of the second power conversion circuit 34 is connected to the charging connector 42.

Based on the foregoing design, when the electric vehicle is charged via the charging pile 40, electric energy output by the AC-DC conversion apparatus 41 can be output by the first power conversion circuit 31 to the electric vehicle via the three-phase transformer 33 and the second power conversion circuit 34. The LLC resonant circuit including each phase of resonant circuit and the inductor circuit 36 is located on the primary side of the three-phase transformer 33. In comparison with LLC resonance located on the secondary side of the three-phase transformer 33, LLC resonance on the primary side can better ensure soft switching and reduce a loss of a switching transistor, thereby improving efficiency of charging the electric vehicle by the charging pile 40.

In some other embodiments. The direct current connection end 341 of the second power conversion circuit 34 of the bidirectional DC-DC conversion apparatus 30 is connected to the other end of the AC-DC conversion apparatus 41, and the direct current connection end 341 of the second power conversion circuit 34 may be connected to, for example, the direct current bus 43, to be connected to the other end of the AC-DC conversion apparatus 41 through the direct current bus 43. The direct current connection end 311 of the first power conversion circuit 31 is connected to the charging connector 42.

Based on the foregoing design, when the electric vehicle is charged via the charging pile 40, the electric energy output by the AC-DC conversion apparatus 41 can be output by the second power conversion circuit 34 to the electric vehicle via the three-phase transformer 33 and the first power conversion circuit 31. The LLC resonant circuit including each phase of resonant circuit and the inductor circuit 36 is located on the secondary side of the three-phase transformer 33.

It should be understood that, in this embodiment of this application, the AC-DC conversion apparatus 41 may be a unidirectional DC-DC conversion apparatus or a bidirectional AC-DC conversion apparatus.

In some embodiments, the AC-DC conversion apparatus 41 may be a unidirectional AC-DC conversion apparatus. In other words, the AC-DC conversion apparatus 41 may be configured to only transmit electric energy output by the power grid to the bidirectional DC-DC conversion apparatus 30, to charge the electric vehicle via the bidirectional DC-DC conversion apparatus 30 and the charging connector 42. In addition, when ends of a plurality of bidirectional DC-DC conversion apparatuses 30 of the charging pile 40 are connected to the direct current bus 43, and the other ends of the plurality of bidirectional DC-DC conversion apparatuses 30 are connected to a plurality of charging connectors 42, a plurality of electric vehicles connected to the plurality of charging connectors 42 may transmit electric energy to each other via the plurality of bidirectional DC-DC conversion apparatuses 30.

For example, two bidirectional DC-DC conversion apparatuses 30 of the charging pile 40 shown in FIG. 8 are respectively connected to two charging connectors 42. An electric vehicle connected to one charging connector 42 may output electric energy to an electric vehicle connected to the other charging connector 42 via the two bidirectional DC-DC conversion apparatuses 30 and the direct current bus 43.

Based on the foregoing design, the charging pile 40 can meet a vehicle to vehicle (vehicle to vehicle, V2V) discharge requirement of the electric vehicles while meeting charging requirements of the electric vehicles.

In some other embodiments, the AC-DC conversion apparatus 41 may be the bidirectional AC-DC conversion apparatus. In other words, in addition to transmitting the electric energy output by the power grid to the bidirectional DC-DC conversion apparatus 30, the AC-DC conversion apparatus 41 may be further configured to transmit the electric energy output by the bidirectional DC-DC conversion apparatus 30 to the power grid.

Based on the foregoing design, the electric vehicle connected to the charging connector 42 can output the electric energy to the power grid via the bidirectional DC-DC conversion apparatus 30 and the AC-DC conversion apparatus 41, so that the charging pile 40 can meet a charging requirement of the electric vehicle and a V2G discharge requirement of the electric vehicle.

It should be further understood that, in this embodiment of this application, each AC-DC conversion apparatus 41 and each bidirectional DC-DC conversion apparatus 30 of the charging pile 40 may be separately disposed, that is, each AC-DC conversion apparatus 41 and each bidirectional DC-DC conversion apparatus 30 are disposed in different housings. Alternatively, one AC-DC conversion apparatus 41 and one bidirectional DC-DC conversion apparatus 30 may be integrated, that is, the AC-DC conversion apparatus 41 and the bidirectional DC-DC conversion apparatus 30 may be integrated in a same housing.

For details about the charging pile 40, refer to related descriptions of embodiments shown in FIG. 1 and FIG. 2. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A bidirectional direct current-direct current, DC-DC, conversion apparatus, wherein the bidirectional DC-DC conversion apparatus comprises a first power conversion circuit, a second power conversion circuit, a three-phase transformer, and three phase resonant circuits, each phase of resonant circuit of the three phase resonant circuits comprises a first capacitor and a first inductor that are connected in series, one end of each phase of resonant circuit is connected to the first power conversion circuit, and the other end of each phase of resonant circuit is connected to the second power conversion circuit via the three-phase transformer; and
the bidirectional DC-DC conversion apparatus further comprises a resonant switching switch circuit and an inductor circuit, wherein the resonant switching switch circuit is configured to connect a circuit between either of two ends of each phase of resonant circuit and the inductor circuit, to enable each phase of resonant circuit and the inductor circuit to form an inductor-inductor-capacitor LLC resonant circuit.

2. The bidirectional DC-DC conversion apparatus according to claim 1, wherein the resonant switching switch circuit is configured to:
when the first power conversion circuit is configured to convert a received direct current into an alternating current, and the second power conversion circuit is configured to convert the alternating current output by the first power conversion circuit into a direct current for output, connect a circuit between the other end of each phase of resonant circuit and the inductor circuit; or
when the second power conversion circuit is configured to convert a received direct current into an alternating current, and the first power conversion circuit is configured to convert the alternating current output by the second power conversion circuit into a direct current for output, connect a circuit between the one end of each phase of resonant circuit and the inductor circuit.

3. The bidirectional DC-DC conversion apparatus according to claim 1 or 2, wherein the inductor circuit comprises three second inductors, and the two ends of each phase of resonant circuit are connected to one end of one second inductor via the resonant switching switch circuit.

4. The bidirectional DC-DC conversion apparatus according to claim 3, wherein the resonant switching switch circuit comprises three resonant switching switches, and the two ends of each phase of resonant circuit are connected to the one end of the second inductor via one resonant switching switch, wherein
the two ends of each phase of resonant circuit are connected to two stationary contacts of the resonant switching switch in a one-to-one correspondence; and
the one end of the second inductor is connected to a moving contact of the resonant switching switch, and the other ends of the three second inductors are connected; or the three second inductors are sequentially connected end-to-end, and connection points of the second inductor and another second inductor are connected to a moving contact of the resonant switching switch.

5. The bidirectional DC-DC conversion apparatus according to any one of claims 1 to 4, wherein the bidirectional DC-DC conversion apparatus further comprises a plurality of second capacitors, the second power conversion circuit comprises three second power conversion bridge arms connected in parallel, and a bridge arm midpoint of each second power conversion bridge arm is connected to the three-phase transformer via one second capacitor.

6. The bidirectional DC-DC conversion apparatus according to claim 5, wherein the three-phase transformer comprises three phase primary-side windings and three phase secondary-side windings, the three phase primary-side windings are connected to the other ends of the three phase resonant circuits in a one-to-one correspondence, and the three phase secondary-side windings are connected to three bridge arm midpoints of the three second power conversion bridge arms in a one-to-one correspondence; and
the bidirectional DC-DC conversion apparatus further comprises at least one of a first turn-quantity switching switch circuit and a second turn-quantity switching switch circuit, wherein
the first turn-quantity switching switch circuit is connected to the three phase primary-side windings, and the first turn-quantity switching switch circuit is configured to switch a quantity of circuit-connected turns of each phase of primary-side winding of the three phase primary-side windings; and
the second turn-quantity switching switch circuit is connected to the three phase secondary-side windings, and the second turn-quantity switching switch circuit is configured to switch a quantity of circuit-connected turns of each phase of secondary-side winding of the three phase secondary-side windings.

7. The bidirectional DC-DC conversion apparatus according to claim 6, wherein the bidirectional DC-DC conversion apparatus comprises the first turn-quantity switching switch circuit, each phase of primary-side winding comprises a first primary-side winding and a second primary-side winding, ends of three first primary-side windings are connected to the other ends of the three phase resonant circuits in a one-to-one correspondence, the other end of the first primary-side winding of one phase of primary-side winding is connected to one end of the second primary-side winding of the one phase of primary-side winding to form a first tap, and the other ends of three second primary-side windings are connected; and
the first turn-quantity switching switch circuit comprises two first turn-quantity switching switches, and the two first turn-quantity switching switches are connected to two phases of primary-side windings other than the one phase of primary-side winding in a one-to-one correspondence, wherein
each first turn-quantity switching switch is configured to connect a circuit between the other end of the first primary-side winding of one corresponding phase of primary-side winding and one end of the second primary-side winding of the corresponding phase of primary-side winding, or each first turn-quantity switching switch is configured to connect a circuit between the other end of the first primary-side winding of a corresponding phase of primary-side winding and the first tap.

8. The bidirectional DC-DC conversion apparatus according to claim 6 or 7, wherein the bidirectional DC-DC conversion apparatus comprises the second turn-quantity switching switch circuit, each phase of secondary-side winding comprises a first secondary-side winding and a second secondary-side winding, ends of three first secondary-side windings are connected to the three bridge arm midpoints of the three second power conversion bridge arms in a one-to-one correspondence, the other end of the first secondary-side winding of one phase of secondary-side winding is connected to one end of the second secondary-side winding of the one phase of secondary-side winding to form a second tap, and the other ends of three second secondary-side windings are connected; and
the second turn-quantity switching switch circuit comprises two second turn-quantity switching switches, and the two second turn-quantity switching switches are connected to two phases of secondary-side windings other than the one phase of secondary-side winding in a one-to-one correspondence, wherein
each second turn-quantity switching switch is configured to connect a circuit between the other end of the first secondary-side winding of one corresponding phase of secondary-side winding and one end of the second secondary-side winding of the corresponding phase of secondary-side winding, or each second turn-quantity switching switch is configured to connect a circuit between the other end of the first secondary-side winding of the corresponding phase of secondary-side winding and the second tap.

9. The bidirectional DC-DC conversion apparatus according to claim 6 or 7, wherein each phase of secondary-side winding comprises a plurality of groups of secondary-side windings, there are a plurality of second power conversion circuits, and the plurality of groups of secondary-side windings are connected to bridge arm midpoints of of the plurality of second power conversion circuits in a one-to-one correspondence; and
the bidirectional DC-DC conversion apparatus further comprises one or more connection switching switch circuits, any two of the plurality of second power conversion circuits are connected to each other via the connection switching switch circuit, each connection switching switch circuit comprises one series switch and two parallel switches, the series switch is configured to connect the any two second power conversion circuits in series, and the two parallel switches are configured to connect the any two second power conversion circuits in parallel.

10. A charging pile, wherein the charging pile comprises an alternating current-direct current, AC-DC, conversion apparatus, the bidirectional direct current-direct current DC-DC conversion apparatus according to any one of claims 1 to 9, and a charging connector, one end of the AC-DC conversion apparatus is configured to connect to an alternating current power supply, and the other end of the AC-DC conversion apparatus is connected to the charging connector via the bidirectional DC-DC conversion apparatus.
